**Europäisches Patentamt**

**European Patent Office**

**Office européen des brevets**

(11) Publication number: **0 151 522**
**B1**

(12) **EUROPEAN PATENT SPECIFICATION**

(45) Date of publication of patent specification: **24.05.89**

(21) Application number: **85300345.7**

(22) Date of filing: **18.01.85**

(51) Int. Cl.⁴: **F 16 H 11/06**

(54) **Control system for an infinitely variable transmission.**

(30) Priority: **30.01.84 JP 14741/84**

(43) Date of publication of application:
**14.08.85 Bulletin 85/33**

(45) Publication of the grant of the patent:
**24.05.89 Bulletin 89/21**

(84) Designated Contracting States:
**DE GB IT NL**

(56) References cited:
**EP-A-0 005 565**
**EP-A-0 011 342**
**GB-A-2 075 619**

(73) Proprietor: **FUJI JUKOGYO KABUSHIKI KAISHA**
**7-2 Nishishinjuku 1-chome Shinjuku-ku**
**Tokyo (JP)**

(72) Inventor: **Miyawaki, Motohisa**
**2490-3 Jindaijimachi**
**Chofu-shi Tokyo (JP)**

(74) Representative: **Kirk, Geoffrey Thomas et al**
**BATCHELLOR, KIRK & EYLES 2 Pear Tree Court**
**Farringdon Road**
**London EC1R 0DS (GB)**

Courier Press, Leamington Spa, England.

## Description

The present invention relates to a transmission control system of an infinitely variable belt-drive automatic transmission for a vehicle, and particularly to a system which provides engine braking appropriate to the vehicle speed when an active drive range (Ds) is selected.

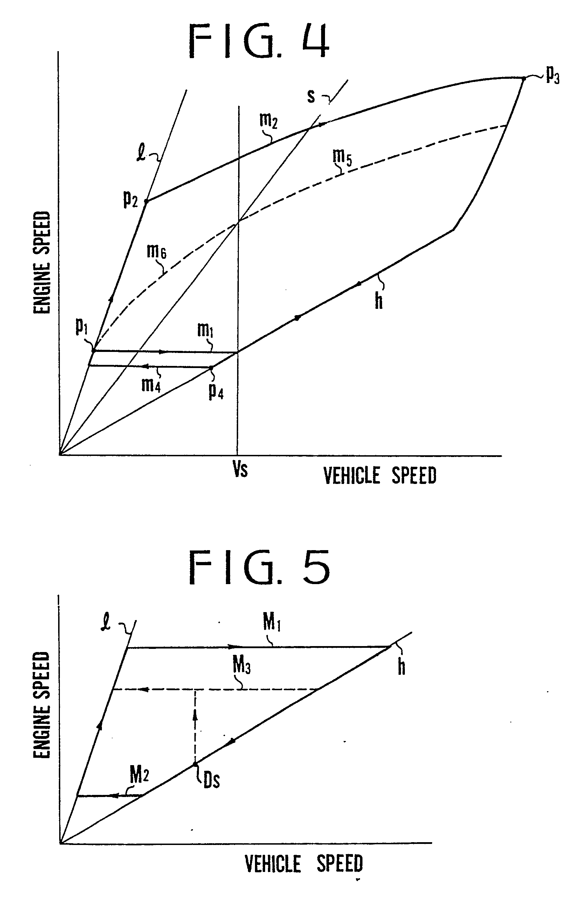

US—A—4 369 675 has disclosed a control system for an infinitely variable belt-drive transmission providing an active drive mode. According to that patent, the transmission ratio is controlled in accordance with the depression of the vehicle accelerator pedal and with the engine speed which is represented by a pitot pressure. The relationship between the engine speed and vehicle speed in that transmission is shown in Figure 5, in which line "l" represents the relationship for the largest transmission ratio, $M_1$ shows the variation of transmission ratio at the highest engine speed. When the engine speed decreases, the engine speed and vehicle speed decreases along the smallest transmission ratio line "h" and the vehicle speed only decreases along a line $M_2$ of the lowest engine speed. Such a transmission ratio variation pattern does not provide a large engine braking effect on the vehicle, i.e. an inactive drive mode.

In order to enable the transmission to operate so as to provide an active drive mode, a device for operating a transmission ratio control valve has been proposed. In accordance with that system, when the active drive mode is selected at a point Ds in Figure 5, engine speed rises to line $M_3$, i.e. an increase of the transmission ratio. Thus, the vehicle speed decreases along the line $M_3$ with increase of the transmission ratio, providing high engine braking effect.

However, in such a system, the level of line $M_3$ is determined irrespective of the variation of vehicle speed. Accordingly, if the level is set at a high engine speed so as to provide sufficient engine braking in a high vehicle speed range, extremely high engine braking occurs at low vehicle speed, causing unpleasant and uneven driving of the vehicle.

An example of an infinitive variable transmission incorporating an engine breaking effect control is to be found in EP—A—11342 which is reflected in the preamble to claim 1.

An object of the present invention is to provide a control system capable of controlling an infinitely variable transmission to provide moderate engine braking effect in a wide range of vehicle speeds.

According to the invention there is provided a control system for an infinitely variable transmission of a vehicle powered by an internal combustion engine, the transmission comprising a drive pulley having a hydraulically shiftable disc and a hydraulic servo device for shifting the disc, a driven pulley having a hydraulically shiftable disc and a hydraulic servo device for shifting the disc, and a belt engaged with both pulleys, the system comprising: a hydraulic circuit having a pump for supplying oil, a detecting means for producing an engine speed signal, a spool-type transmission ratio control valve in the hydraulic circuit responsive to the engine speed signal for controlling the oil and for shifting the disc of the drive pulley to change the transmission ratio, and a spool-type pressure regulator valve responsive to the transmission ratio by means of a transmission ratio detection means which is responsive to the movement of the disc of the drive pulley for increasing the line pressure in the hydraulic circuit with increase of the transmission ratio; an axially moveable operating member coaxial with the spool of the transmission ratio control valve; a spring between the spool and the operating member; means for shifting the operating member in dependence on the depression of an accelerator pedal of the vehicle, thereby shifting the spool against the force dependent on the engine speed signal; and an actuator for shifting the operating member against the force dependent on the engine speed signal, characterised in that the actuator responsive to line pressure is enabled by operation of a manual selecting means to shift the operating member to increase the load on spring against the force dependent on the engine speed signal; and there is a correcting means responsive to an increase in transmission ratio from a predetermined transmission ratio, detected by the transmission ratio detection means, for disabling the actuator to decrease the load on the spring; whereby when the actuator is enabled, the spool is shifted by the increased load on the spring to increase the transmission ratio at a higher engine speed and the load on the spring is decreased at higher transmission ratios than the predetermined transmission ratio by operation of the correcting means.

The means for shifting the operating member in dependence on the depression of the accelerator pedal of the vehicle preferably comprises a cam operatively connected to the accelerator pedal and a rod following the rotation of the cam to shift the correcting member. The detecting means may be a pitot tube for producing pitot pressure and the actuator may comprise a hydraulic piston and cylinder assembly.

The invention will be more readily understood by way of example from the following description of a control system in accordance therewith, reference being made to the accompanying drawings, in which:

Figures 1a and 1b together show in cross-sectional view an infinitely variable belt-drive transmission to which the control system may be applied;

Figures 2a and 2b together schematically show the control system of the transmission;

Figure 3 is a plan view showing a part of the system;

Figure 4 is a graph showing the transmission characteristics of the system; and

Figure 5 is a graph showing the transmission characteristics of a known control system.

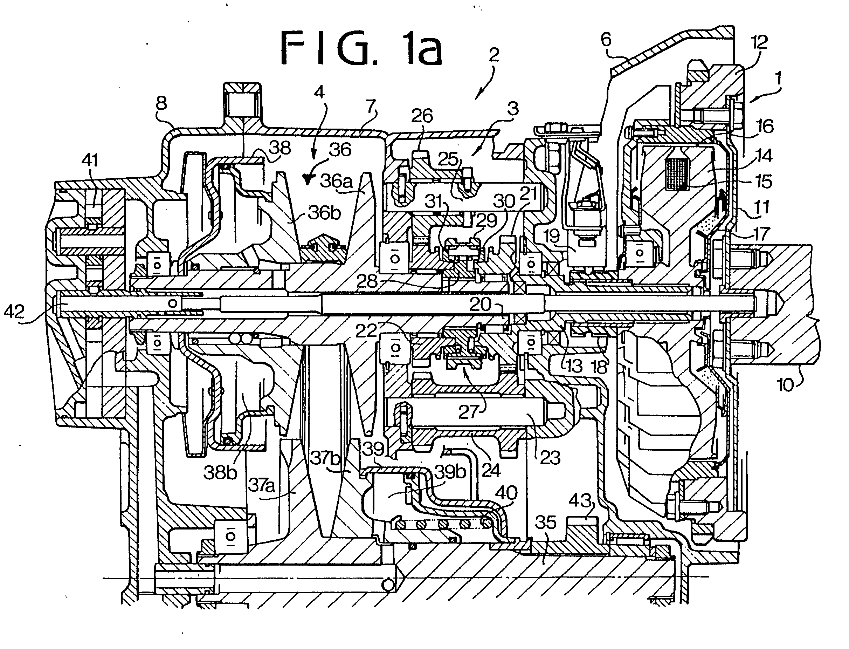

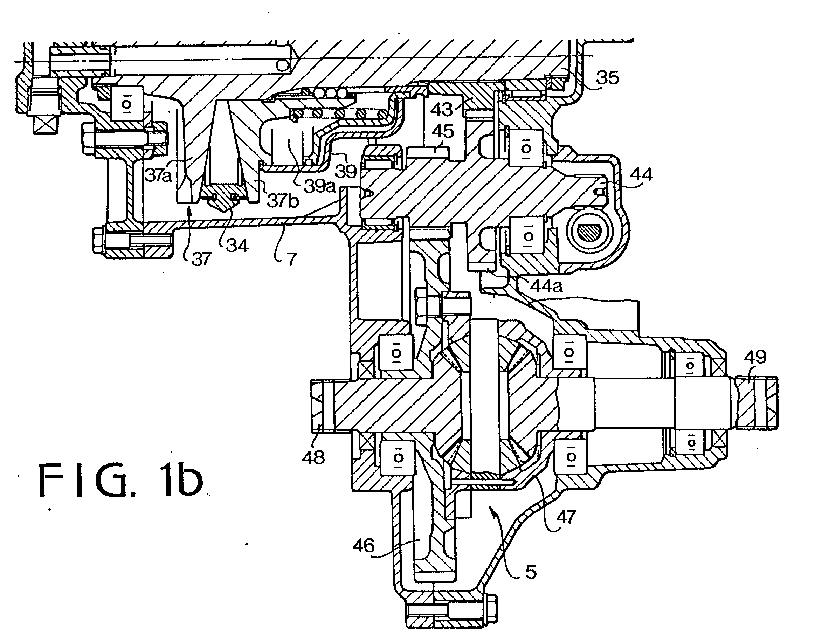

Referring to Figures 1a and 1b, the infinitely variable belt-drive automatic transmission for a vehicle comprises an electromagnetic powder clutch 1, an infinitely variable belt-drive transmission 2, a selector device 3, pulleys and belt device 4, final reduction device 5, and a pressure oil control circuit (not shown). The electromagnetic powder clutch 1 is located in a housing 6, and the selector device 3, pulleys, and belt device 4 and final reduction device 5 are located in a main housing 7 and a side housing 8. Crankshaft 10 of an engine (not shown) is connected to an annular drive member 12 through a drive plate 11 of the electromagnetic powder clutch 1. The electromagnetic powder clutch comprises a driven member 14 which carries a magnetizing coil 15. The driven member 14 has its outer periphery spaced from the inner periphery of the drive member 12 by a gap 16, and a powder chamber 17 is defined between the drive member 12 and driven member 14. The powder chamber 17 is filled with powder of magnetic material. The driven member 14 is secured to an input shaft 13 of the belt-drive transmission. A holder secured to the driven member 14 carries slip rings 18 which are electrically connected to the coil 15. The coil 15 is supplied through brushes 19 and slip rings 18 with current from a control circuit for the electromagnetic powder clutch.

When the magnetizing coil 15 is excited by clutch current, driven member 14 is magnetized to produce a magnetic flux passing through the drive member 12. The magnetic powder is aggregated in the gap 16 by the magnetic flux and the driven member 14 is engaged with the drive member 12 by the powder. On the other hand, when the clutch current is cut off, the drive and driven members 12 and 14 are disengaged from one another.

In the belt-drive transmission 2, the selector device 3 is provided between the input shaft 13 and a main shaft 20. The main shaft 20 is cylindrical and is disposed coaxially with the input shaft 13. The selector device 3 comprises a drive gear 21 integral with input shaft 13, reverse driven gear 22 rotatably mounted on the main shaft 20, and a synchronizer 27 mounted on the main shaft 20. The drive gear 21 meshes with one of counter gears 24 rotatably mounted on a shaft 23. Another gear of the counter gears 24 engages with an idler gear 26 which is rotatably mounted on a shaft 25 and which in turn engages with the driven gear 22. (The idler gear 26 is illustrated in development in Figure 1a for the convenience of the illustration).

The synchronizer 27 comprises a hub 28 secured to the main shaft 20, a synchronizer sleeve 29 slidably splined with the hub 28, and synchronizer rings 30 and 31. The synchronizer sleeve 29 is adapted to engage with splines of the drive gear 21 or with splines of driven gear 22 through rings 30 or 31.

At the neutral position (N range) of a selector lever (not shown), the sleeve 29 engages neither gear, so that the main shaft 20 is disconnected from the input shaft 13. When the sleeve 29 is engaged with the gear 21, the input shaft 13 is connected to the main shaft 20 through the gear 21 and synchronizer 27 to provide forward drive (D range). When the sleeve 29 is engaged with the gear 22, the input shaft 13 is connected to the main shaft 20 through gears 21, 24, 26 and 22 to provide reverse drive (R range).

The main shaft 20 has an axial passage in which an oil pump driving shaft 42 connected to crankshaft 10 is mounted. An output shaft 35 is arranged parallel with the main shaft 20. A drive pulley 36 and a driven pulley 37 are mounted on shafts 20 and 35. A fixed conical disc 36a of the drive pulley 36 is integral with main shaft 20 and an axially movable conical disc (shiftable disc) 36b is axially slidably mounted on the main shaft 20. The movable conical disc 36b also slides in a cylinder secured to the main shaft 20 to form a servo device 38. A chamber 38b of the servo device 38 communicates through the pressure oil control circuit with an oil pump 41 driven by shaft 42.

A fixed conical disc 37a of the driven pulley 37 is formed on the output shaft 35 opposite the movable disc 36b and a movable conical disc (shiftable disc) 37b is slidably mounted on the shaft 35 opposite disc 36a. Movable conical disc 37b has a cylindrical portion in which a piston portion of the output shaft 35 is slidably engaged to form a servo device 39. A chamber 39b of the servo device 39 is communicated with the oil pump 41 through the pressure oil control circuit. A spring 40 is provided to urge the movable conical disc 37b towards the fixed conical disc 37a. A drive belt 34 engages with the drive pulley 36 and the driven pulley 37.

Secured to the output shaft 35 is a drive gear 43 which engages with an intermediate reduction gear 44a on an intermediate shaft 44. An intermediate gear 45 on shaft 44 engages with a final gear 46. Rotation of the final gear 46 is transmitted to axles 48 and 49 of vehicle driving wheels through a differential 47.

The pressure oil control circuit is responsive to vehicle speed, engine speed and throttle valve position for controlling the oil from the oil pump 41 to servo devices 38 and 39 thereby to move discs 36b and 37b. Thus, the transmission ratio is infinitely changed according to the driving conditions.

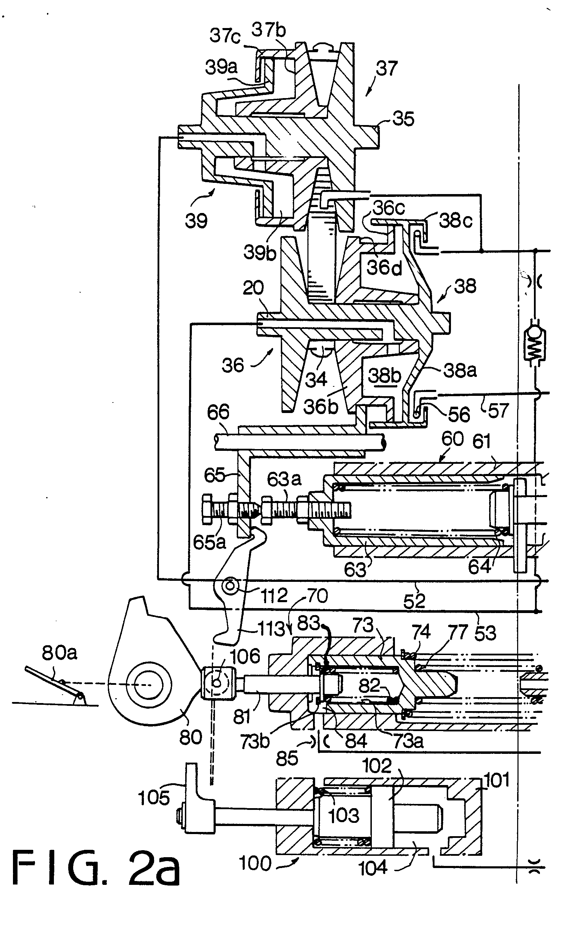

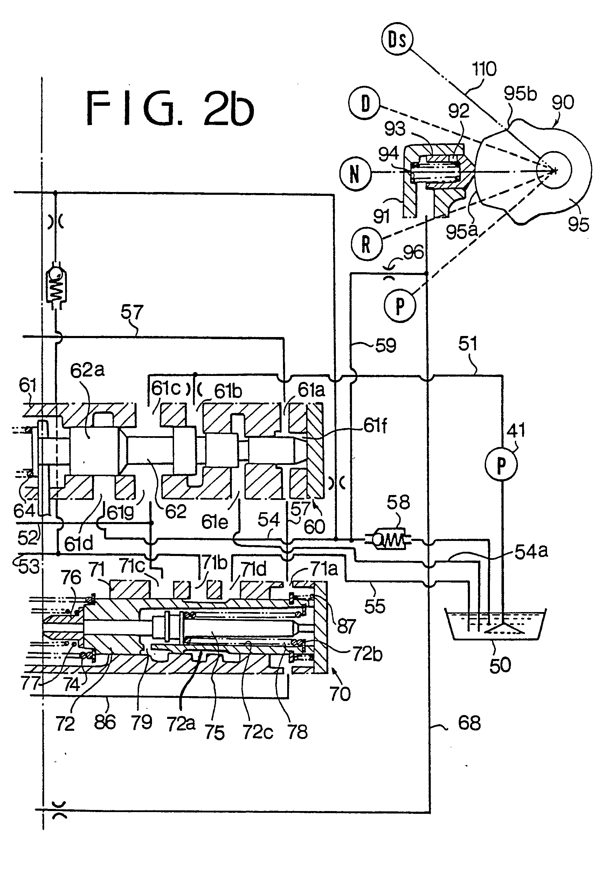

Figures 2a and 2b show the hydraulic control circuit. In the servo device 38 of the drive pulley 36, a cylinder 38a integrately formed on the main shaft 20 is engaged with a piston 36c formed on the movable disc 36b to form drive pulley servo chamber 38b, to which line pressure is supplied. In the servo device 39 of the driven pulley 37, a cylinder 37c formed integrally with the movable conical disc 37b is engaged with a piston 39a formed on the output shaft 35 to form driven pulley servo chamber 39b. The movable disc 36b has an area exposed to the line pressure which is larger than the corresponding area of the movable disc 37b.

Oil from an oil reservoir 50 is supplied by pump 41 to a pressure regulator valve 60 through a passage 51. An oil passage 52 from the pressure regulator valve 60 communicates firstly with the driven pulley servo chamber 39b and secondly with the drive pulley servo chamber 38b through a transmission ratio control valve 70 and a passage 53. Oil flows back to the oil reservoir 50 through drain passages 54 and 55 which are in communication with the valves 60 and 70, respectively. The drive pulley cylinder 38a has an annular inside groove 38c in which a rotational speed sensor (detecting means) 56 in the form of a pitot tube is provided for measuring the speed of the oil in the groove and hence the speed of the main shaft 20 which varies dependent on the engine speed. The pitot pressure produced by the rotational speed sensor 56 is applied to the valves 60 and 70 through a passage 57.

A ball check valve 58 is provided in the drain passage 54 for the pressure regulator valve 60, and the passage is communicated firstly with a selector position detecting device upstream of the check valve 58 through a passage 59 and secondly with an actuator 100 for the transmission ratio control valve 70 through a passage 68.

The pressure regulator valve 60 comprises a valve body 61, a spool 62 and a spring 64 located between a spring retainer 63 and one end of the spool 62 and urging the spool 62 to the right. A sensor shoe 65 for detecting the actual transmission ratio is slidably mounted on a lubricating oil pipe 66 which is parallel with the axis of the spool 62. A bolt 65a secured to an end of the sensor shoe 65 engages with an end of a bolt 63a secured to the spring retainer 63, and the other end of the sensor shoe 65 engages with an outside periphery 36d of the movable disc 36b. Thus, the position of the movable disc 36b, which in operation represents the transmission ratio, is transmitted to the spool 62 through the spring 64. At the end of the valve body 61, opposite to the spring 64, pitot pressure is applied to an end chamber 61f through the oil passage 57 and a port 61a, and pump oil pressure is applied to a chamber 61b through the passage 51. The passage 51 is communicated with the passage 52 through ports 61c and 61g. A chamber 61d and a chamber 61e, which is provided between the chambers 61f and 61b to prevent leakage of oil affecting the pitot pressure, are communicated with the oil reservoir 50 through drain passages 54 and 54a. The chamber 61d is communicated with the port 61g if land 62a of the spool 62 is moved to the left so that the line pressure can be regulated.

Thus, the spool 62 is urged in the direction to open port 61d by the pitot pressure and the pump oil pressure, while the elastic force of the spring corresponding to the transmission ratio detected by the sensor shoe 65 urges the spool 62 in the direction to close the port 61d. High line pressure is therefore generated at the port 61c at low engine speed with a large transmission ratio. The sensor shoe 65 is moved to the left in Figure 2a as the transmission ratio decreases, reducing the force of the spring 64 to lower the line pressure. The line pressure exerts on the belt 34 a force appropriately dependent on the transmission ratio so as not to cause the belt to slip on the pulleys.

The transmission ratio control valve 70 comprises a valve body 71, a spool 72, an operating plunger (operating member) 73, and a spring 74 between the spool 72 and the plunger 73. The pitot pressure of passage 57 is applied to a chamber 71a. The control valve 70 further has a port 71b communicated with passage 53, a port 71c communicated with the passage 52, a port 71d communicated with the passage 55, and an annular groove 72a formed on the spool 72 so as to communicate ports 71b and 71c or ports 71b and 71d for supplying or discharging line pressure to or from the drive pulley servo chamber 38b in dependence on the position of the spool 72. A regulator spring 77 is provided between the operating plunger 73 and a retainer 76 securely mounted on a projecting end of a regulator plunger 75 which is slidably provided in an axial cavity 72c in the spool 72. A spring 78 is located between a flange of the plunger 75 and a retainer 72b of the spool 72. The force of the regulator spring 77 is determined by the extent of the plunger 75 projecting from the spool 72 and the position of the plunger 75 is dependent on the line pressure at the port 71c which is supplied to the interior of the spool 72 through a small aperture 79.

The operating plunger 73 is slidably mounted in the valve body 71 and has an axial cavity 73a. A rod 81 is axially slidably mounted in the valve body 71, and a flange 83 of the rod 81 is slidably engaged with the wall of the cavity 73a. A small spring 82 is provided between the flange 83 and the plunger 73, and the flange 83 engages with a stop 73b secured to the plunger. The cavity 73a is supplied with the pitot pressure through a port 84 and a passage 86 containing a restriction 85 and communicated with the chamber 71a. A spring 87 is located between an end of the spool 72 and the valve body 71 to adjust the load on the spring 82. An end of the rod 81 engages with a cam 80 which is operatively connected to an accelerator pedal 80a of the vehicle so as to be rotated in dependence on the depression of the pedal.

When the spool 72 is moved by the pitot pressure to communicate port 71b with port 71c, line pressure is applied to the servo chamber 38b of the drive pulley 36 to upshift the transmission. On the other hand, when the port 71b communicates with the port 71d, the chamber 38b is drained to cause downshift.

The selector position detecting device comprises a valve body 91, a valve 93 having a drain aperture 92 which is slidably mounted in the valve body 91, a spring 94 for urging the valve 93 against a cam 95 which rotates according to the position of a selector lever (manual selecting means) 90. The cam 95 has a lobe 95a which corresponds to D, N and R range positions, and indentations 95b formed on opposite sides of the lobe 95a and corresponding to P and Ds range positions. At the D, N and R range positions, the lobe 95a pushes the valve 93 in the direction to close the drain aperture 92, so that actuating oil pressure is built up. At the P and Ds range positions, the valve 93 moves outwards to open the drain aperture 92, so that the actuating oil pressure in the passage 54, 59 is lowered. At that time the oil pressure decreases gradually, because of restriction 96 provide in oil passage 59.

Actuator 100 comprises a cylinder 101 forming a piston chamber 104, a piston 102 which is slidably mounted in the cylinder 101, and a spring 103 which urges the piston 102 to the right. Actuating oil pressure is applied to chamber 104 through passage 68. Further, a hook portion 105 formed at the outer end of the piston is engageable with a pin 106 on the rod 81 of the transmission ratio control valve 70. At the P range or Ds range, since no actuating oil pressure exists, piston 102 presses rod 81 to the right in Figure 2a, controlling the transmission zone to the side of high engine revolution. Then release of the acceleration pedal at the Ds range causes downshift of the transmission, so that the engine braking is obtained.

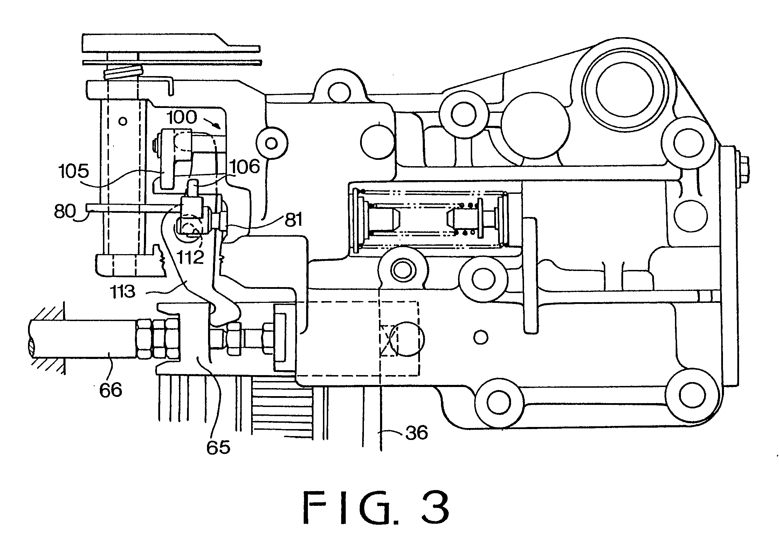

A correction lever (correcting means) 113 rotatably supported by a pin 112 is provided between the sensor shoe 65 and hook portion 105 of the piston 102, in order to correct the characteristics in the Ds range. One end of lever 113 engages with the hook portion 105 only when piston 102 of the actuator 100 moves to the right. Although the relative position of the correction lever 113 is not clear in Figure 2a since the valves 60, 70 and the actuator 100 are shown to be separated from each other, Figure 3 shows the actual position.

In operation, while the vehicle is stationary, the driven pulley servo chamber 39b is supplied with line pressure adjusted by the pressure regulator valve 60 through the passages 51, 52, and the drive pulley servo chamber 38b is drained, since spool 72 is forced into its right end position by the spring 74. Thus, in the pulley and belt device 4 of the infinitely variable belt-drive transmission 2, the driving belt 34 engages with the driven pulley 37 at a maximum running diameter to provide the largest transmission ratio (low speed stage). When D range is selected, the output shaft 35 and the main shaft 20 are connected to each other in a selector device 3 by the selector lever. When the acceleration pedal is depressed, the electromagnetic powder clutch 1 is excited by clutch current, transmitting the engine power to the drive pulley 36. The power of the engine is transmitted to the output shaft 35 at the largest transmission ratio by the driving belt 34 and driven pulley 37, and further transmitted to the axles of the driving wheels through the final reduction device 5. Thus, the vehicle is started.

At that time, the line pressure is caused by the pressure regulator valve 60 to be at its highest value. The pitot pressure supplied by the speed sensor 56 increases with increase of the engine speed. On the other hand, since the line pressure is at a high value, the plunger 75 is at the retracted position, so that the load on spring 77 is zero. The cam 80 pushes the rod 81 in dependence on the depression of the accelerator pedal, which causes the plunger 73 to be moved to the right through spring 82. The movement of the plunger 73 causes the spool 72 to be moved to the right through spring 74. When the force dependent on pitot pressure becomes higher than the force of the spring 74, spool 72 is moved to the left to communicate the port 71b with port 71c, so that the line pressure is applied to the chamber 38b to move the disc 36b. Thus, the transmission ratio begins to fall. The transmission ratio varies from a point between points $P_1$ and $P_2$ on the largest transmission ratio line I in Figure 4, in dependence on driving conditions of the vehicle.

The point $P_1$ is a variation start point at the smallest depression of the accelerator pedal, and the point $P_2$ is a start point at the largest depression.

Since line pressure is supplied to the chamber 38b, the distance between the conical discs of the drive pulley 36 is gradually decreased, so that the running diameter of driving belt 34 increases gradually to reduce the transmission ratio. When the disc 36b moves to the left (Figure 2a), the sensor shoe 65, spring retainer 63 and spool 62 are also moved to the left. Accordingly, port 61g communicates with port 61d to discharge the oil to the oil reservoir 50. The line pressure then decreases, causing the plunger 75 to move to the left and increasing the load on spring 77. Accordingly, in order to upshift, the pitot pressure must become higher than the increment of the load on the spring 77. For example, at the largest depression of the accelerator pedal, the engine speed is increased as the transmission ratio decreases as shown by line $m_2$ of Figure 4. The line $m_2$ reaches a point $P_3$ on the smallest transmission ratio line h at a maximum vehicle speed.

On the other hand, when the vehicle is started at very light load such as on a down gradient, before the load applied to spring 77 by cam 80 increases, the pitot pressure rises, so that the spool 72 of the control valve 70 is shifted early. Thus, the transmission ratio begins to upshift at a low point $P_1$ and varies along line $m_1$ as shown in Figure 4, without increasing the engine speed.

When the accelerator pedal is released, i.e. at deceleration, the operating plunger 73 in the transmission control valve 70 moves to its most retracted position, and hence the load on the spring 74 becomes minimum, so that the spool 72 is shifted to the left by the pitot pressure, and line pressure is applied to the drive pulley servo chamber 38b to keep the transmission ratio minimum. Thus, engine speed reduces with vehicle speed along the line h of the minimum transmission ratio. When the engine speed decreases to a low value, the pitot pressure decreases, so that the spring 74 acts to shift the spool 72 to the right. Thus, the drive pulley servo chamber 38b is drained, and the transmission ~is downshifted from a point $P_4$ along a line $m_4$, keeping the engine speed constant.

The following is the explanation of the transmission control operation in the Ds range. In Figure 4, a line S represents a predetermined transmission ratio line. When engine speed and vehicle speed reach the line S, the end of the sensor shoe 65 causes the correction lever 113 to engage with the hook portion 105. If the transmission ratio becomes larger than the value of the line S, the disc 36b moves to the right, so that the correction lever 113 is rotated in the clockwise direction through the sensor shoe 65, causing the piston 102 to move to the left.

When the Ds range is selected, the drain aperture 92 of valve 93 is opened, causing chamber 104 of the actuator 101 to be drained. If the Ds range is selected in the region on the right side of the line S (smaller transmission ratio region), the correction lever 113 fails to engage with hook portion 105. Accordingly, the piston 102 is moved to the right by the spring 103, causing the hook portion 105 to engage with the pin 106 on the rod 81 to move the rod to the right. Thus, plunger 73 is shifted to the right to increase the load on springs 74 and 77. Accordingly, the spool 72 is shifted to the right at a high engine speed (at a high pitot pressure), so that the transmission ratio increases as shown by line $m_5$ in the high engine speed range.

On the other hand, when Ds range is selected at the left side of the line S, or if, after the Ds range selection, the engine speed or vehicle speed enters into the left side range, the transmission ratio becomes larger than the ratio S. Accordingly, the end of the sensor shoe 65 engages with the hook portion 105 to shift the piston 102 to the left, so that the load on the springs 74, 77 of the transmission ratio valve 70 is reduced gradually. Thus, the transmission ratio line is corrected as shown by a line $m_6$ in Figure 4. The engine speed decreases as the transmission ratio becomes larger, since the load on the springs 74, 77 decreases gradually.

Consequently, in the vehicle speed range higher than the vehicle speed Vs at which the line $m_5$ changes to $m_6$, sufficient engine braking is effected, since the transmission ratio is downshifted from the line h to line $m_5$. In the range lower than the vehicle speed Vs, moderate engine braking is produced, since the transmission is downshifted to the line $m_6$ effective at low engine speed.

The correction range and the characteristics of Ds range can be changed, for example by changing the pivot point of the correction lever 113. Further, because the line pressure adjusted by the pressure regulator valve 60 varies according to the transmission ratio, the line pressure can also be used for actuating an additionally provided valve to release the actuator 100.

## Claims

1. A control system for an infinitely variable transmission of a vehicle powered by an internal combustion engine, the transmission comprising a drive pulley (36) having a hydraulically shiftable disc (36b) and a hydraulic servo device for shifting the disc (36b), a driven pulley (37) having a hydraulically shiftable disc (37b) and a hydraulic servo device (39) for shifting the disc (37b), and a belt (34) engaged with both pulleys (36, 37), the system comprising: a hydraulic circuit having a pump (41) for supplying oil, a detecting means (56) for producing an engine speed signal, a spool-type transmission ratio control valve (70) in the hydraulic circuit responsive to the engine speed signal for controlling the oil and for shifting the disc (36b) of the drive pulley (36) to change the transmission ratio, and a spool-type pressure regulator valve (60) responsive to the transmission ratio by means of a transmission ratio detection means (65) which is responsive to the movement of the disc (36b) of the drive pulley for increasing the line pressure in the hydraulic circuit with increase of the transmission ratio; an axially moveable operating member (73) coaxial with the spool (72) of the transmission ratio control valve (70); a spring (74) between the spool (72) and the operating member (73); means (80—82) for shifting the operating member (73) in dependence on the depression of an accelerator pedal (80a) of the vehicle, thereby shifting the spool (72) against the force dependent on the engine speed signal; and an actuator (100) for shifting the operating member (73) against the force dependent on the engine speed signal, characterised in that the actuator (100) responsive to line pressure is enabled by operation of a manual selecting means (90) to shift the operating member (73) to increase the load on spring (74) against the force dependent on the engine speed signal; and there is a correcting means (113) responsive to an increase in transmission ratio from a predetermined transmission ratio, detected by the transmission ratio detection means (65), for disabling the actuator (100) to decrease the load on the spring (74); whereby when the actuator (100) is enabled, the spool (72) is shifted by the increased load on the spring (74) to increase the transmission ratio at a higher engine speed and the load on the spring (74) is decreased at higher transmission ratios than the predetermined transmission ratio by operation of the correcting means (113).

2. A control system according to claim 1, wherein the means for shifting the operating member (73) in dependence on the depression of the accelerator pedal (80a) comprises a cam (80) operatively connected to the accelerator pedal (80a) and a rod (81) following the rotation of the cam to shift the operating member (73).

3. A control system according to claim 2, wherein a spring (82) is provided between the rod (81) and the operating member (73).

4. A control system according to claim 1 or claim 2, wherein the engine speed detecting means (56) is a pitot tube (56) for producing pitot pressure.

5. A control system according to any one of the preceding claims, wherein the actuator (100) comprises a hydraulic cylinder (101) and a piston (102) in the cylinder (101), with a spring acting on one side of the piston and the other side of the piston being subject to line pressure, and the manual selecting means (90) includes valve means (91—94) for controlling the line pressure applied to the cylinder (101), a shift lever, and a cam (95) operated by a shift lever to operate the valve means (91—94).

6. A control system according to any one of the preceding claims, wherein the correcting means (113) is a lever which can be engaged on one side by a sensor shoe (65) of the transmission ratio detecting means and on the other side by a hook portion (105) of the actuator (100).

## Patentansprüche

1. Steuerungssystem für ein stufenlos veränderliches Getriebe eines von einer Verbrennungskraftmaschine angetriebenen Fehrzeugs, wobei das Getriebe eine Antriebs-Riemenscheibe (36) mit einer von einer hydraulischen Servoeinrichtung (38a) verschiebbaren Wandscheibe (36b), eine Abtriebs-Riemenscheibe (37) mit einer von einer hydraulischen Servoeinrichtung (39b) verschiebbaren Wandscheibe (37b) und einen über beide Riemenscheiben (36, 37) laufenden Riemen (34) aufweist;

mit einem Hydraulikkreis mit einer Pumpe (41) für den Ölnachschub, einem Aufnehmer (56) zum Erzeugen eines Motordrehzahlsignals und einem Getriebe-Übersetzungsgrad-Schiebersteuerventil (70) in dem Hydraulikkreis, das auf das Motordrehzahlsignal anspricht, um das Öl zu steuern und eine Verschiebung der Wandscheibe (36b) der Antriebs-Riemenscheibe (36) zwecks Veränderung des Übersetzungsgrades zu bewirken;

mit einem Schieber-Druckregelventil (60), das auf den Übersetzungsgrad aufgrund eines Übersetzungsgrad-Aufnehmers (65) abhängig von der Bewegung der Wandscheibe (36b) der Antriebsriemenscheibe anspricht, um den Leitungsdruck im Hydraulikkreis mit zunehmenden Übersetzungsgrad zu erhöhen;

mit einem axial beweglichen, zum Schieber (72) des Übersetzungsgrad-Steuerventils (70) koaxialen Betätigungsglied (73);

mit einer zwischen dem Schieber (72) und dem Betätigungsglied (73) angeordneten Feder (74);

mit Mitteln (80—82) zum Verschieben des Betätigungsglieds (73) in Abhängigkeit vom Niedertreten eines Beschleunigungspedals (80a) des Fahrzeugs, was zu einem Verschieben des Schiebers (72) gegen die vom Motordrehzahlsignal abhängige Kraft führt; und

mit einem Betätiger (100) zum Verschieben des Betätigungsgliedes (73) gegen die vom Motordrehzahlsignal abhängige Kraft;

dadurch gekennzeichnet, daß der auf den Leitungsdruck ansprechende Betätiger (100) durch Betätigung eines manuellen Wählers (90) in Betrieb gesetzt wird, um das Betätigungsglied (73) zu verschieben, damit die Belastung der Feder (74) entgegen der vom Motordrehzahlsignal abhängigen Kraft erhöht wird; und daß eine Korrektureinrichtung (113) vorgesehen ist, die abhängig von einer Erhöhung des Übersetzungsgrades von einem vorbestimmten Wert, festgestellt durch den Übersetzungsgrad-Aufnehmer (65), anspricht, um den Betätiger (100) unwirksam zu machen und die Belastung der Feder (74) zu veringern, so daß im Betrieb des Betätigers (100) der Schieber (72) durch die erhöhte Belastung der Feder (74) zu einer Erhöhung des Übersetzungsgrades bei höherer Motordrahzahl verschoben wird und die Belastung der Feder (74) bei höheren Übersetzungsgraden als einem vorbestimmten Wert durch Betätigung der Korrektureinrichtung (113) vermindert wird.

2. Steuerungssystem nach Anspruch 1, dadurch gekennzeichnet, daß das Mittel zum Verschieben des Betätigungsgliedes (73) abhängig von dem Niedertreten des Beschleunigungspedals (80a) einen Nocken (80) aufweist, der mit dem Beschleunigungspedal (80a) sowie einer Stange (81) in Wirkverbindung steht, welche der Drehung des Nockens folgt und das Betätigungsglied (73) verschiebt.

3. Steuerungssystem nach Anspruch 2, dadurch gekennzeichnet, daß eine Feder (82) vorgesehen ist, welche zwischen der Stange (81) und dem Betätigungsglied (73) angeordnet ist.

4. Steuerungssystem nach Anspruch 1 oder 2, dadurch gekennzeichnet, daß der Motordrehzahl-Aufnehmer (56) ein Staurohr (Pitorohr) (56) zur Erzeugung eines Staudrucks ist.

5. Steuerungssystem nach einem der vorhergehenden Ansprüche, dadurch gekennzeichnet, daß der Betätiger (100) einen Hydraulikzylinder (101) mit einem Kolben (102) aufweist, eine Feder auf einer Seite des Kolbens angreift und die andere Seite des Kolbens mit dem Leitungsdruck beaufschlagt wird; und daß der manuelle Wähler (90) ein Ventil (91—94) zur Steuerung des dem Zylinder (101) zugeführten Leitungsdruckes aufweist, sowie einen Schiebehebel (90a) und einen von diesem zum Betreiben des Ventils (91—94) betätigten Nocken (95).

6. Steuerungssystem nach einem der vorhergehenden Ansprüche, dadurch gekennzeichnet, daß die Korrektureinrichtung (113) aus einem Hebel besteht, an dessen einer Seite das Fühlelement (65) des Übersetzungsgrad-Aufnehmers und an dessen anderer Seite ein hakenbereich (105) des Betätigers (100) angreifen kann.

## Revendications

1. Système de contrôle pour une transmission infiniment variable d'un véhicule dont l'énergie est fournie par un moteur à combustion interne, la transmission comprenant une poulie motrice (36) présentant un flasque mobile hydrauliquement (36b) et un dispositif de commande hydraulique pour commander ledit flasque, une poulie menée (37) présentant un flasque mobile hydrauliquement (37b) et un dispositif de commande hydraulique (39) pour commander ledit flasque mobile (37b), une courroie (34) engagée sur les deux poulies (36, 37), ledit système comprenant un circuit hydraulique avec une pompe (41) pour l'alimentation en huile dudit circuit, des moyens de détection (56) pour produire un signal de la vitesse du moteur, un distributeur à tiroir (70) de contrôle du rapport de transmission insérée dans le circuit hydraulique et sensible au signal de la vitesse du moteur, pour contrôler l'huile de commande du déplacement du flasque (36b) de la poulie motrice (36) et changer le rapport de transmission, un distributeur à tiroir régulateur de pression (60) sensible au rapport de transmission par des moyens de détection du rapport de transmission (65) et qui sont sensibles aux mouvements du flasque (36b) de la poulie motrice (36) pour augmenter la ligne de pression dans le circuit hydraulique avec un accroissement du rapport de transmission, un organe de commande (73) mobile axialement et coaxial au tiroir (72) du distributeur de contrôle du rapport de transmission (70), un ressort (74) étant inséré entre l'organe de commande (73) et le tiroir (72), eť des moyens (80, 82) pour déplacer l'organe de commande (73) dépendamment de la dépression d'une pédale d'accélérateur (80a) du véhicule et ainsi déplacer le tiroir (72) contre la force dépendant du signal de la vitesse du moteur, et un organe d'actionnement (100) pour déplacer l'organe de commande (73) contre la force dépendant du signal de la vitesse du moteur, caractérisé en ce que l'organe d'actionnement (100) est activé par des moyens de sélection manuels (90) pour permettre qu'il soit sensible à la ligne de pression afin de déplacer l'organe de commande (73) et augmenter la charge du ressort (74) contre la force dépendant du signal de la vitesse du moteur, des moyens de correction (113) sensibles à un accroissement du rapport de transmission étant prévus à partir d'un rapport de transmission déterminé détecté par les moyens de détection (65) du rapport de transmission pour désaccoupler l'organe d'actionnement (100) afin de diminuer la charge du ressort (74), de sorte que lorsque l'organe d'actionnement (100) est actif, le tiroir (72) est déplacé par l'augmentation de la charge du ressort (74) pour accroître le rapport de transmission à une vitesse élevée du moteur et la charge sur le ressort (74) est diminuée à des rapports de transmission supérieurs au rapport de transmission déterminé par les moyens de correction (113).

2. Système de contrôle, selon la revendication 1, caractérisé en ce que les moyens pour déplacer l'organe de commande (73) en dépendance de la dépression sur l'accélérateur (80a) comprennent une came (80) reliée opérativement à la pédale d'accélérateur (80a) et une tige (81) qui en fonction de la rotation de la came déplace l'organe de commande (73).

3. Système de contrôle, selon la revendication 2, caractérisé en ce qu'un ressort (82) est inséré entre la tige (81) et l'organe de commande (73).

4. Système de contrôle, selon la revendication 1 ou 2, caractérisé en ce que les moyens de détection de la vitesse du moteur (56) sont constitués par un tube à Pitot pour produire une pression de Pitot.

5. Système de contrôle, selon l'une quelconque des revendications précédentes, caractérisé en ce que l'organe d'actionnement (100) comprend un cylindre hydraulique (101) et un piston (102) logé dans le cylindre (101) avec un ressort agissant sur une face du piston (102), tandis que l'autre face est en relation avec la ligne de pression, et les moyens de sélection manuels (90) comprennent des moyens à soupapes (91, 94) pour contrôler la ligne de pression envoyée dans le cylindre (101), un levier mobile et une came (95) commandés par ledit levier mobile étant prévus pour commander les moyens à soupapes (91, 94).

6. Système de contrôle, selon l'une quelconque des revendications précédentes, caractérisé en ce que les moyens de correction (113) comprennent un levier qui peut être engagé par une extrémité sur une face d'un patin d'un capteur (65) des moyens de détection du rapport de transmission et par l'autre extrémité à un crochet (105) de l'organe d'actionnement (100).

# FIG. 1a

EP 0 151 522 B1

FIG. 1b

EP 0 151 522 B1

FIG. 2a

# FIG. 2b

FIG. 3

# F I G. 4

# F I G. 5